# EUROPÄISCHE PATENTSCHRIFT

(11) **EP 1 872 841 B1**
(45) Veröffentlichungstag und Bekanntmachung des Hinweises auf die Patenterteilung: **11.03.2009**
(21) Anmeldenummer: 07011011.9
(22) Anmeldetag: 05.06.2007
(51) Int. Cl.: B01D 29/64, C02F 1/50

(54) **Rückspülbarer Wasserfilter**
Reverse-flush water filter
Filtre à eau avec nettoyage à contre-courant

(30) Priorität: 26.06.2006 DE 202006010015 U
(43) Veröffentlichungstag der Anmeldung: 02.01.2008
(73) Patentinhaber: Judo Wasseraufbereitung GmbH, D-71364 Winnenden (DE)
(72) Erfinder: Fiess, Helmut, 71576 Burgstetten (DE); Söcknick, Ralf, Dr., 70806 Kornwestheim (DE)
(74) Vertreter: Kohler Schmid Möbus

(56) Entgegenhaltungen:
- WO-A-00/57986
- DE-U1- 9 014 382
- JP-A- 4 145 910
- US-A- 5 078 874
- US-A- 6 042 729

## Beschreibung

Die Erfindung betrifft einen rückspülbaren Wasserfilter mit einem in einem Gehäuse zwischen einem Einlass und einem Auslass angeordneten Siebfiltereinsatz, der das Gehäuse in eine Einlasskammer und eine Auslasskammer unterteilt, wobei mindestens eine Fläche des Wasserfilters eine keimtötende Beschichtung aufweist.

Die oligodynamische, d.h. keimtötende Wirkung von Silber-Spuren auf Mikroorganismen ist seit langen bekannt. Bereits im Jahre 1893 erkannte v. Nägeli diesen Effekt.

EP 0 200 710 B1 beschreibt ein Verfahren zum Aufbereiten von Trink- und/oder Brauchwasser, bei dem das Wasser einer Magnetfeldbehandlung in Kombination mit einer oligodynamischen Behandlung unterworfen wird. Hierfür werden viele einzelne Stücke oligodynamisch wirkender Metalle in der Wasserströmung beweglich angeordnet. Nachteilig ist hier, dass einerseits sehr viele teure Metallstücke, wie z.B. Silberplättchen, benötigt werden, und andererseits diese nur begrenzt im Volumen des Wassers wirken, nicht jedoch an problematischen Oberflächen und in Todräumen, wo sich bevorzugt Keime ansiedeln.

Dokument 1 (WO 00/57986) beschreibt einen Sandbettfilter mit einem Sandbett in einem Filtergehäuse. Im Filtergehäuse befindet sich außerdem eine Desinfektionseinheit, die eine Kapsel und ein in der Kapsel durch perforierte Wände fixiertes Desinfektionsmittel umfasst. Als Desinfektionsmittel dienen silberbeschichtete Partikel, die als Festbett oder Wirbelbett vorliegen können.

DE 100 40 008 A1 offenbart eine Filtereinrichtung für Brauchwasser, bei der innerhalb des Filters beströmte Flächen aus Edelmetall, insbesondere Silber, bestehen. Eine vollständige Versilberung aller beströmten Flächen ist extrem teuer und darüber hinaus auch nicht notwendig. Es reicht in der Regel aus, besonders verkeimungsgefährdete Oberflächen zu schützen. Dies sind Oberflächen in der Einlasskammer, die mit dem Filterkuchen in Berührung kommen, Oberflächen in schlecht durchströmten Bereichen und/oder Oberflächen von Kunststoffen, die Weichmacher enthalten.

EP 0 681 994 B1 beschreibt einen Keimschutz für Hauswasserfilter-Siebeinsätze. Siebfiltereinsätze in Anlagen zur Behandlung von Trinkwasser innerhalb von Gebäuden haben nach DIN EN 13443-1 eine Durchlassweite von 80 µm bis 150 µm, Derartige grobmaschige Siebe dienen zur Ausfiltration von mit dem Leitungswasser mitgeführten Fremdpartikeln wie Rostteilchen oder Sandkörner, die in Hausinstallationen erhebliche Schäden anrichten können. Durch die Filtration bildet sich in Abhängigkeit von der Betriebszeit und der Wasserqualität auf der Oberfläche des Siebfilters ein Filterkuchen, der unter ungünstigen Bedingungen neben anorganischen Partikeln auch Mikroorganismen enthalten kann. Um einer Verkeimung vorzubeugen, sollen daher rückspülbare Filter nach DIN 1988 alle 2 Monate rückgespült werden. Hierdurch wird der Filterkuchen entfernt und der Filtereinsatz gereinigt. Dennoch kann in der Zwischenzeit abhängig von den jeweiligen Umgebungsbedingungen bereits ein Wachstum von Mikroorganismen am Filter stattgefunden haben. Um einen hygienischen Betrieb auch zwischen den Spülintervallen zu gewährleisten, wird in EP 0 681 994 B1 deshalb vorgeschlagen, die gesamte Oberfläche des Siebfilters mit einer Beschichtung aus Silber zu versehen. Nachteilig ist hierbei, dass einerseits eine relativ große Oberfläche versilbert werden muss, was teuer ist. Andererseits sind Bereiche wie Absaugvorrichtungen und Spülwasserkanal vorhanden, die beim Rückspülvorgang ebenfalls mit dem Filterkuchen in Kontakt kommen und nicht versilbert sind. Ebenso werden andere Flächen wie die Innenseite des Filtergehäuses nicht geschützt.

Aufgabe der vorliegenden Erfindung ist es daher, oben genannte Nachteile zu vermeiden und einen Wasserfilter sowie ein Verfahren der eingangs genannten Art vorzustellen, mit dem Feststoffpartikel gemäß DIN EN 13443-1 aus dem Trinkwasser ausgefiltert werden können, und bei dem ein hygienischer Betrieb auf einfache und kostengünstige sowie effektive Weise gewährleistet ist.

Diese Aufgabe wird erfindungsgemäß dadurch gelöst, dass die mindestens eine mit der keimtötenden Beschichtung versehene Fläche des Wasserfilters mittels einer Antriebsvorrichtung relativ zu dem Siebfiltereinsatz beweglich ist, und dass in der Einlasskammer eine oder mehrere Absaugvorrichtungen zur Befreiung der Oberfläche des Siebfiltereinsatzes von dort angesammeltem Filterkuchen vorgesehen sind, wobei die mindestens eine mit keimtötender Beschichtung versehene Fläche Teil der Absaugvorrichtungen ist.

Im Rückspülbetrieb des Wasserfilters, insbesondere eines Hauswasserfilters, wird die Siebfilteroberfläche vom dort angesammelten Filterkuchen mittels einer oder mehrerer Absaugvorrichtungen befreit. Absaugvorrichtungen können beispielsweise in Form von Absaugrinnen oder -kanälen ausgestaltet sein. Dabei bewegen sich die mit der keimtötenden Beschichtung versehenen Absaugvorrichtungen mittels einer Antriebsvorrichtung (manuell oder über einen Motor betrieben) über die Fläche des Siebfilters bzw. Filterkuchens. Die für Mikroorganismen giftige, also keimtötende Beschichtung der Absaugvorrichtungen überstreicht so nach und nach den gesamten Nahbereich der Siebfilteroberfläche und bekämpft dort angesiedelte Keime wirkungsvoll, ohne dass hierzu die komplette Oberfläche des Siebfilters beschichtet sein muss. Dies ist besonders kostengünstig, da die Beschichtung der kompletten, riesigen Oberfläche des Siebfilters mit einer keimtötenden Substanz teuer wäre. Zusätzlich wird die Hygiene in den Absaugvorrichtungen, durch die Spülwasser abließt, verbessert.

Vorzugsweise enthält die keimtötende Beschichtung mindestens ein oligodynamisch wirksames Metall.

Dieses oligodynamisch wirksame Metall kann beispielsweise Silber oder eine Silberlegierung sein. Silber ist ein Metall mit starker oligodynamischer, d.h. keimtötender Wirkung. Es kann galvanisch oder durch Aufdampfverfahren auf unterschiedlichen metallischen oder nichtmetallischen Werkstoffen in einer dünnen und kostengünstigen Schicht abgeschieden werden. Es bildet dabei eine fest haftende, in Wasser schwer lösliche Oberflächenschicht. Geringste Mengen an Silberionen lösen sich dennoch im Wasser, so dass die keimtötende Wirkung nicht nur direkt auf der Silberschicht, sondern auch in deren näheren Umgebung vorhanden ist.

Eine vorteilhafte Ausführungsform des erfindungsgemäßen Wasserfilters sieht vor, dass zumindest eine der Absaugvorrichtungen einen mit Silber beschichteten Kunststoff enthält. Absaugvorrichtungen aus Kunststoff sind im Spritzgussverfahren in beliebiger Form kostengünstig herstellbar. Um im Bereich der Absaugvorrichtungen eine keimtötende Wirkung zu erhalten, ist es vollkommen ausreichend, lediglich die Oberfläche zu versilbern. Es ist nicht notwendig, die Absaugvorrichtungen als ganzes aus einem oligodynamischen Metall zu fertigen. Dies wäre unnötigerweise mit erheblichen Kosten verbunden.

Besonders vorteilhaft ist es, wenn der Siebfiltereinsatz koaxial zum Gehäuse angeordnet ist.

In diesem Fall lässt sich eine Weiterbildung dieser Ausführungsform realisieren, bei der auf der dem Gehäuse zugewandten Seite zumindest einer der Absaugvorrichtungen eine Abstreifvorrichtung zur Abstreifung von Verunreinigungen von der Innenwand des Gehäuses, vorgesehen ist, wobei die Abstreifvorrichtung eine weitere keimtötende Beschichtung aufweist. Vorzugsweise wird der Siebfiltereinsatz im Normalbetrieb von außen nach innen, und im Rückspülbetrieb von innen nach außen durchströmt. Prinzipiell ist es jedoch auch möglich, den Siebfiltereinsatz umgekehrt im Normalbetrieb von innen nach außen, und im Rückspülbetrieb von außen nach innen zu durchströmen. Beim Bewegen der Absaugvorrichtungen im Rückspülbetrieb über die Fläche des Siebfilters wird gleichzeitig durch die Abstreifvorrichtung auch die Oberfläche des Filtergehäuses von anhaftenden Belägen befreit und durch den Kontakt mit deren keimtötender Beschichtung desinfiziert.

Besonders vorteilhaft ist es, wenn das Gehäuse zumindest teilweise transparent ist. Auf diese Weise sind der Zustand des Siebfilters und dessen Abreinigung im Rückspülbetrieb sowie der Zustand der Silberbeschichtung optisch kontrollierbar.

Vorzugsweise ist die mindestens eine mit keimtötender Beschichtung versehene Fläche der Absaugvorrichtungen relativ zum Siebfiltereinsatz rotierbar.

Bei einer vorteilhaften Ausführungsform der Erfindung münden die Absaugvorrichtungen in einen Spülwasserkanal, dessen Oberfläche zumindest teilweise mit einer keimtötenden Substanz beschichtet ist. So sind sämtliche Wandungen, die beim Rückspülvorgang mit keimbelastetem Filterkuchen in Kontakt kommen können, mit einer keimtötenden Beschichtung versehen oder kommen mit einer solchen in Konzakt. Dadurch wird die Hygiene im Hauswasserfilter gesteigert.

In den Rahmen der vorliegenden Erfindung fällt auch ein Verfahren zum Keimschutz für rückspülbare Wasserfilter mittels einer zuvor beschriebenen Vorrichtung, bei dem während des Rückspülbetriebs die mit der keimtötender Beschichtung versehene Fläche und der Siebfiltereinsatz mittels einer Antriebseinrichtung relativ zueinander bewegt werden, wobei die mit der keimtötender Beschichtung versehene Fläche die Oberfläche des Siebfiltereinsatzes überstreicht. Durch die Relativbewegung der relativ kleinen, beschichteten Oberfläche gegenüber dem Siebfiltereinsatz ist es möglich, die keimtötende Wirkung der beschichteten Oberfläche in Bereichen zu entfalten, die selbst nicht beschichtet sind.

Vorzugsweise wird dazu die Absaugvorrichtung mit der mit der keimtötenden Beschichtung versehene Fläche über den Siebfiltereinsatz hinwegbewegt. Alternativ dazu kann der Siebfiltereinsatz und damit auch ein daran haftender Filterkuchen während des Rückspülbetriebs mittels einer Antriebseinrichtung bewegt werden, während die Absaugvorrichtungen ortsfest sind. Ebenso ist es denkbar, dass sowohl der Siebfiltereinsatz als auch die mit der keimtötenden Beschichtung versehene Fläche bewegt werden. Auch so ist eine Relativbewegung von Absaugvorrichtungen und Siebfilteroberfläche bzw. Filterkuchen möglich. Die Bewegung des Siebfiltereinsatzes relativ zu der mit der keimtötenden Beschichtung versehenen Fläche kann beispielsweise eine Drehbewegung um die Längsachse des Siebfiltereinsatzes oder eine axiale Verschiebung sein.

Bei einer bevorzugten Variante des erfindungsgemäßen Verfahrens wird die mit der weiteren keimtötenden Beschichtung versehene Abstreifvorrichtung während des Rückspülbetriebs über die innere Oberfläche des Gehäuses bewegt. Dann wird zusätzlich auch die Oberfläche des Gehäuses abgereinigt und die Hygiene in diesem Bereich durch den Kontakt mit der keimtötenden Oberfläche der Abstreifvorrichtung verbessert.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften

Charakter für die Schilderung der Erfindung.

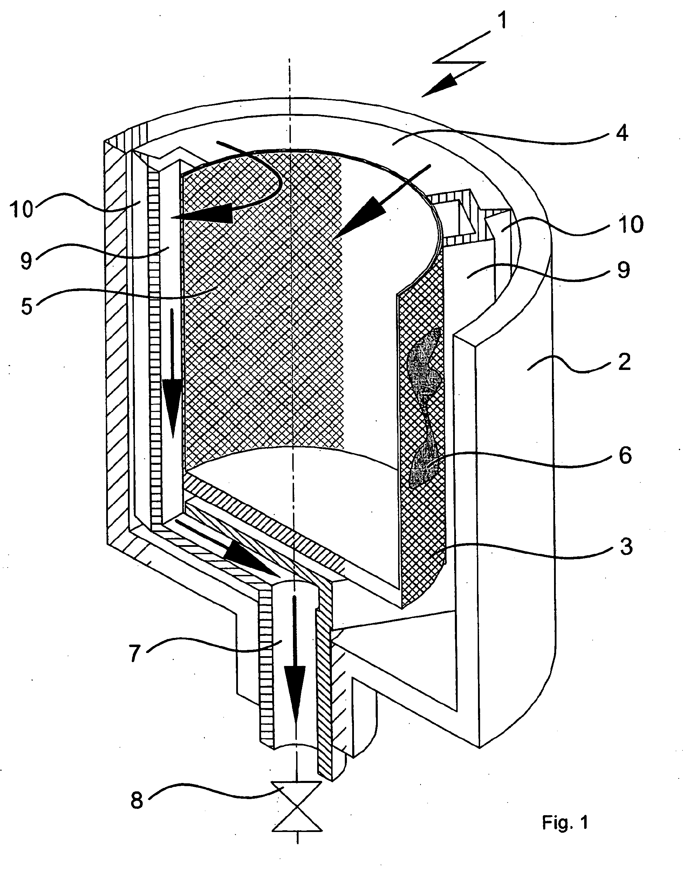

- Fig. 1: zeigt einen schematischen Vertikalschnitt durch eine Ausführungsform eines erfindungsgemäßen Hauswasserfilters im Rückspülbetrieb.

Der in **Fig. 1** gezeigte rückspülbare Hauswasserfilter **1** umfasst ein Gehäuse **2,** in dem ein Siebfiltereinsatz **3** koaxial zum Gehäuse **2** angeordnet ist. Der Siebfiltereinsatz 3 unterteilt den Innenraum des Gehäuses 3 in eine Einlasskammer **4,** die mit einem, in Fig. 1 nicht dargestellten, Wassereinlass verbunden ist, und eine Auslasskammer **5,** die mit einem, in der Abbildung ebenfalls nicht gezeigten, Wasserauslass verbunden ist.

In der in Fig. 1 gezeigten Ausführungsform des erfindungsgemäßen Wasserfilters wird der Siebfiltereinsatz 3 im Normalbetrieb von außen nach innen durchströmt. Prinzipiell ist es jedoch auch möglich, den Siebfiltereinsatz 3 im Normalbetrieb von innen nach außen zu durchströmen. Dabei bleiben im Wasser vorhandene Verunreinigungen, die größer als die Maschenweite des Siebfiltereinsatzes 3 sind, an diesem hängen und bilden einen Filterkuchen **6.** Die Filterfeinheit der hier beschrieben mechanisch wirkenden Filter zur Behandlung von Trinkwasser innerhalb von Gebäuden beträgt nach DIN EN 13443-1 80 µm bis 150µm.

Um den gebildeten Filterkuchen 6 vom Siebfiltereinsatz 3 zu entfernen, muss der Hauswasserfilter von Zeit zu Zeit rückgespült werden. Hierzu wird mittels einer nicht abgebildeten Antriebseinrichtung ein in einem Spülwasserkanal **7** befindliches Spülventil **8** geöffnet. Gleichzeitig rotieren in den Spülwasserkanal 7 mündende Absaugvorrichtungen **9** um den Siebfiltereinsatz 3 und über den Filterkuchen 6. Dabei fließt ein Teil des gereinigten Wassers wie dargestellt aus der Auslasskammer 5 durch die Siebfilterfläche des Siebfiltereinsatzes 3 in die Absaugvorrichtungen 9, welche sich in der Einlasskammer 4 befinden, und reißt dabei die anhaftenden Partikel des Filterkuchens 6 mit sich. Diese werden schließlich über den Spülwasserkanal 7 ausgespült.

Erfindungsgemäß sind die Absaugvorrichtungen 9 mit einer keimtötenden Beschichtung, insbesondere einer Silberbeschichtung, versehen. Die versilberten Absaugvorrichtungen 9 mit ihrer keimtötenden Wirkung überstreichen während der Rotation um den Siebfiltereinsatz 3 nach und nach dessen komplette Oberfläche und damit auch den Filterkuchen 6. Keime werden durch direkten Kontakt mit der Silberbeschichtung oder durch Spuren von gelösten Silberionen abgetötet bzw. deren Wachstum gehemmt. Durch Rotation der versilberten Absaugvorrichtungen 9 kommen verkeimungsgefährdete Bereiche des Hauswasserfilters 1 mit keimtötendem Silber in Kontakt ohne selbst versilbert sein zu müssen.

Auf der dem Gehäuse 2 zugewandten Seite der Absaugvorrichtungen 9 befinden sich Abstreifvorrichtungen **10,** die ebenfalls versilbert sind. Die Abstreifvorrichtungen 10 streifen während der Rotation der Absaugvorrichtungen 9 Verunreinigungen von der Innenseite des Gehäuses 2 ab. Dabei kommt die Gehäusewand bei jeder Rückspülung mit Silber in Kontakt, wodurch das Aufwachsen von Keimen erschwert wird. Der Keimschutz ist besonders bei transparenten Gehäusen von Vorteil, die zwar eine visuelle Kontrolle der Abreinigung ermöglichen, gleichzeitig aber auch einen Lichteinfall erlauben und damit unter ungünstigen Bedingungen die Gefahr eines Keimwachstums fördern können.

Schließlich kann auch die innere Oberfläche des Spülwasserkanals 7 versilbert sein. Es sind dann sämtliche Wandungen, die beim Rückspülvorgang mit keimbelastetem Filterkuchen 6 in Kontakt kommen können, mit einer keimtötenden Beschichtung versehen oder kommen mit einer solchen in Kontakt. Dadurch wird die Hygiene im Hauswasserfilter gesteigert.

### Bezugszeichenliste

- 1: Hauswasserfilter
- 2: Gehäuse
- 3: Siebfiltereinsatz
- 4: Einlasskammer
- 5: Auslasskammer
- 6: Filterkuchen
- 7: Spülwasserkanal
- 8: Spülventil
- 9: Absaugvorrichtungen
- 10: Abstreifvorrichtung

## Patentansprüche

1. Rückspülbarer Wasserfilter (1) mit einem in einem Gehäuse (2) zwischen einem Einlass und einem Auslass angeordneten Siebfiltereinsatz (3), der das Gehäuse (2) in eine Einlasskammer (4) und eine Auslasskammer (5) unterteilt, wobei mindestens eine Fläche des Wasserfilters (1) eine keimtötende Beschichtung aufweist,
**dadurch gekennzeichnet,**
**dass** die mindestens eine mit der keimtötenden Beschichtung versehene Fläche des Wasserfilters (1) mittels einer Antriebsvorrichtung relativ zu dem Siebfiltereinsatz (3) beweglich ist, und
**dass** in der Einlasskammer (4) eine oder mehrere Absaugvorrichtungen (9) zur Befreiung der Oberfläche des Siebfiltereinsatzes (3) von dort angesammeltem Filterkuchen (6), vorgesehen sind, wobei die mindestens eine mit keimtötender Beschichtung versehene Fläche Teil der Absaugvorrichtungen (9) ist.

2. Rückspülbarer Wasserfilter (1) nach Anspruch 1, **dadurch gekennzeichnet, dass** die keimtötende Beschichtung mindestens ein oligodynamisch wirksames Metall enthält.

3. Rückspülbarer Wasserfilter (1) nach Anspruch 2, **dadurch gekennzeichnet, dass** das oligodynamisch wirksame Metall Silber oder eine Silberlegierung ist.

4. Rückspülbarer Wasserfilter(1) nach einem der vorherigen Ansprüche, **dadurch gekennzeichnet, dass** zumindest eine der Absaugvorrichtungen (9) einen mit Silber beschichteten Kunststoff enthält.

5. Rückspülbarer Wasserfilter (1) nach einem der vorherigen Ansprüche, **dadurch gekennzeichnet, dass** der Siebfiltereinsatz(3) koaxial zum Gehäuse (2) angeordnet ist.

6. Rückspülbarer Wasserfilter (1) nach Anspruch 5, **dadurch gekennzeichnet, dass** auf der dem Gehäuse (2) zugewandten Seite zumindest einer der Absaugvorrichtungen (9) eine Abstreifvorrichtung (10) zur Abstreifung von Verunreinigungen von der Innenwand des Gehäuses (2), vorgesehen ist, wobei die Abstreifvorrichtung (10) eine weitere keimtötende Beschichtung aufweist.

7. Rückspülbarer Wasserfilter (1) nach einem der vorherigen Ansprüche, **dadurch gekennzeichnet, dass** das Gehäuse (2) zumindest teilweise transparent ist.

8. Rückspülbarer Wasserfilter (1) nach einem der vorherigen Ansprüche, **dadurch gekennzeichnet, dass** die mindestens eine mit keimtötender Beschichtung versehene Fläche der Absaugvorrichtungen (9) relativ zum Siebfiltereinsatz (3) rotierbar ist.

9. Rückspülbarer Wasserfilter (1) nach einem der vorherigen Ansprüche, **dadurch gekennzeichnet; dass** die Absaugvorrichtungen (9) in einen Spülwasserkanal (7) münden, dessen Oberfläche zumindest teilweise mit einer keimtötenden Substanz beschichtet ist.

10. Verfahren zum Keimschutz für rückspülbare Wasserfilter (1) nach einem der vorhergehenden Ansprüche, **dadurch gekennzeichnet, dass** während des Rückspülbetriebs die mit der keimtötender Beschichtung versehene Fläche und der Siebfiltereinsatz (3) mittels einer Antriebseinrichtung relativ zueinander bewegt werden, wobei die mit der keimtötender Beschichtung versehene Fläche die Oberfläche des Siebfiltereinsatzes (3) überstreicht.

11. Verfahren nach Anspruch 10 zum Keimschutz für rückspülbare Wasserfilter (1) nach einem der Ansprüche 6 bis 9, **dadurch gekennzeichnet, dass** die mit der weiteren keimtötenden Beschichtung versehene Abstreifvorrichtung (10) während des Rückspülbetriebs über die innere Oberfläche des Gehäuses (2) bewegt wird.

## Claims

1. Backflushable water filter (1), having a filtering screen insert (3) arranged in a housing (2) between an inlet and an outlet, dividing the housing (2) into an inlet chamber (4) and an outlet chamber (5), wherein at least one surface of the water filter (1) comprises a germicidal coating,
**characterized in that**
the at least one surface of the water filter (1) being provided with a germicidal coating is movable relative to the filtering screen insert (3) by means of a drive device, and
**in that** in the inlet chamber (4) one or plural suction devices (9) are provided for removing the filter cake (6) accumulated there from the surface of the filtering screen insert (3), wherein the at least one surface provided with a germicidal coating is part of the suction devices (9).

2. Backflushable water filter (1) according to claim 1, **characterized in that** the germicidal coating contains at least one oligodynamically-active metal.

3. Backflushable water filter (1) according to claim 2, **characterized in that** the oligodynamically-active metal consists of silver or a silver composition.

4. Backflushable water filter (1) according to any one of the preceding claims, **characterized in that** at least one of the suction devices (9) contains a silver-coated plastic.

5. Backflushable water filter (1) according to any one of the preceding claims, **characterized in that** the filtering screen insert (3) is arranged coaxially in relation to the housing (2).

6. Backflushable water filter (1) according to claim 5, **characterized in that** on the side facing the housing (2) at least one of the suction devices (9) is provided with a wiper (10) for wiping off contamination from the inner wall of the housing (2), with the wiper (10) comprising a further germicidal coating.

7. Backflushable water filter (1) according to any one of the preceding claims, **characterized in that** at least part of the housing (2) is transparent.

8. Backflushable water filter (1) according to any one of the preceding claims, **characterized in that** the at least one surface of the suction devices (9) being provided with a germicidal coating is rotatable relative to the filtering screen insert (3).

9. Backflushable water filter (1) according to any one of the preceding claims, **characterized in that** the suction devices (9) terminate in a flushing water channel (7), the surface of which is coated at least in part with a germicidal substance.

10. Germ protection method for backflushable water filters (1) according to any one of the preceding claims, **characterized in that** the surface provided with the germicidal substance and the filtering screen insert (3) are moved relative to each other by means of a drive device during the backflushing process, with the surface being provided with the germicidal coating grazing over the surface of the filtering screen insert (3).

11. Method according to claim 10 of germ protection for backflushable water filters (1) according to any one of claims 6 to 9, **characterized in that** the wiper (10) which is provided with the further germicidal coating is moved across the inner surface of the housing (2) during the backflushing process.

## Revendications

1. Filtre à eau (1) apte au rinçage à contre-courant, comportant une cartouche de filtre-tamis (3) interposée entre une admission et une sortie, dans un carter (2), et scindant ledit carter (2) en une chambre d'admission (4) et en une chambre de sortie (5), au moins une surface dudit filtre à eau (1) présentant un revêtement germicide,
**caractérisé par le fait**
**que** la surface dudit filtre à eau (1), prévue au minimum et munie du revêtement germicide, peut être mise en mouvement vis-à-vis de la cartouche de filtre-tamis (3), au moyen d'un dispositif d'entraînement ; et
**qu'**un ou plusieurs dispositif(s) (9) d'évacuation par aspiration est (sont) prévu(s) dans la chambre d'admission (4), pour débarrasser la surface de la cartouche de filtre-tamis (3) de gâteaux de filtration (6) qui y sont accumulés, sachant que la surface prévue au minimum, munie d'un revêtement germicide, fait partie intégrante desdits dispositifs (9) d'évacuation par aspiration.

2. Filtre à eau (1) apte au rinçage à contre-courant, selon la revendication 1, **caractérisé par le fait que** le revêtement germicide renferme au moins un métal à action oligodynamique.

3. Filtre à eau (1) apte au rinçage à contre-courant, selon la revendication 2, **caractérisé par le fait que** le métal à action oligodynamique est de l'argent ou un alliage d'argent.

4. Filtre à eau (1) apte au rinçage à contre-courant, selon l'une des revendications précédentes, **caractérisé par le fait qu'**au moins l'un des dispositifs (9) d'évacuation par aspiration renferme une matière plastique revêtue d'argent.

5. Filtre à eau (1) apte au rinçage à contre-courant, selon l'une des revendications précédentes, **caractérisé par le fait que** la cartouche de filtre-tamis (3) est agencée coaxialement au carter (2).

6. Filtre à eau (1) apte au rinçage à contre-courant, selon la revendication 5, **caractérisé par le fait qu'**un dispositif de raclement (10) est prévu, du côté d'au moins l'un des dispositifs (9) d'évacuation par aspiration qui est tourné vers le carter (2), en vue de racler des impuretés de la paroi intérieure dudit carter (2), le dispositif de raclement (10) présentant un revêtement germicide supplémentaire.

7. Filtre à eau (1) apte au rinçage à contre-courant, selon l'une des revendications précédentes, **caractérisé par le fait que** le carter (2) est au moins partiellement transparent.

8. Filtre à eau (1) apte au rinçage à contre-courant, selon l'une des revendications précédentes, **caractérisé par le fait que** la surface des dispositifs (9) d'évacuation par aspiration, prévue au minimum et munie d'un revêtement germicide, peut tourner vis-à-vis de la cartouche de filtre-tamis (3).

9. Filtre à eau (1) apte au rinçage à contre-courant, selon l'une des revendications précédentes, **caractérisé par le fait que** les dispositifs (9) d'évacuation par aspiration débouchent dans un canal (7) à eau de rinçage dont la surface est revêtue, au moins en partie, d'une substance germicide.

10. Procédé de protection antibactérienne pour filtres à eau (1) aptes au rinçage à contre-courant, selon l'une des revendications précédentes, **caractérisé par le fait que** la surface munie du revêtement germicide et la cartouche de filtre-tamis (3) sont animées de mouvements relatifs au moyen d'un système d'entraînement, pendant le mode rinçage à contre-courant, sachant que ladite surface, munie du revêtement germicide, balaie la surface de ladite cartouche de filtre-tamis (3).

11. Procédé selon la revendication 10, destiné à la protection antibactérienne de filtres à eau (1) aptes au rinçage à contre-courant, selon l'une des revendications 6 à 9, **caractérisé par le fait que** le dispositif de raclement (10) muni du revêtement germicide supplémentaire est mis en mouvement, pendant le mode rinçage à contre-courant, au-dessus de la surface intérieure du carter (2).
